# FASCICULE DE BREVET EUROPEEN

(11) **EP 3 300 933 B1**
(45) Date de publication et mention de la délivrance du brevet: **06.11.2019**
(21) Numéro de dépôt: 17189962.8
(22) Date de dépôt: 07.09.2017
(51) Int. Cl.: B62D 21/18, B60F 1/04, B61D 15/12, B60M 1/28

(54) **VÉHICULE FER/ROUTE POUR LA MISE EN PLACE DE CATÉNAIRE**
SCHIENEN-/STRASSENFAHRZEUG ZUM VERLEGEN EINER OBERLEITUNG
RAIL/ROAD VEHICLE FOR PLACING CATENARIES

(30) Priorité: 07.09.2016 FR 1658320
(43) Date de publication de la demande: 04.04.2018
(73) Titulaire: Maintenance du Centre, 28630 Mignières (FR)
(72) Inventeur: PETIT, Philippe, 85100 LES SABLES D'OLONNE (FR)
(74) Mandataire: Prouvez, Julien

(56) Documents cités:
- WO-A1-2011/129752
- DE-U1-202004 014 163
- US-A1- 2014 116 284

## Description

### DOMAINE DE L'INVENTION

La présente invention concerne le domaine des travaux d'infrastructures tels que l'installation, la réparation et la maintenance de ces infrastructures et notamment les infrastructures ferroviaires. L'invention concerne plus particulièrement les équipements utilisés pour les opérations de câblage de caténaires.

### ARRIERE PLAN DE L'INVENTION

Il est connu de réaliser la pose ou le changement des câbles de caténaires à l'aide de trains pourvus de plusieurs wagons techniques spécialisés tractés par des motrices ferroviaires. Typiquement, le premier wagon situé à l'avant du train reçoit les tourets de câble à caténaire et un tendeur de câble, le deuxième wagon reçoit un mât de mise à hauteur, le troisième wagon porte une nacelle élévatrice à partir de laquelle les opérateurs contrôlent le bon positionnement du câble dans ses supports. L'utilisation d'un tel train oblige à placer celui-ci sur le tronçon de voie objet des travaux à partir d'un premier aiguillage et à l'évacuer au niveau d'un deuxième aiguillage. Il est également nécessaire de disposer d'une grue pour réaliser le chargement des tourets de câble sur le premier wagon. Lors des travaux de rénovation sur des voies comportant peu d'aiguillages, les temps d'immobilisation de la voie sont allongés du temps nécessaire au train spécial pour se rendre depuis le premier aiguillage sur la portion de voie objet des travaux et évacuer la voie via le deuxième aiguillage. Les temps d'immobilisation induits par ces manœuvres ainsi que le grand nombre d'opérateurs interdisent l'utilisation de trains spéciaux de ce type pour des opérations ponctuelles ou des opérations de maintenance dans des plages d'intervention de faible amplitude. Les lignes ferroviaires les plus chargées, et donc les plus critiques, doivent donc faire l'objet d'immobilisations importantes, incompatibles avec les obligations de service des opérateurs ferroviaires.
Un véhicule comprenant un châssis articulé et pourvue des moyens mécanisés de chargement, depuis le sol, et de déchargement, au sol, d'un touret de câble ainsi que des moyens de dévidement du câble à partir du touret est divulgué dans le document DE20 2004 014 163U1.

### OBJET DE L'INVENTION

L'invention a pour objet de réduire les temps d'intervention et/ou diminuer considérablement le nombre d'intervenants sur des chantiers d'infrastructures électriques.

### RESUME DE L'INVENTION

A cet effet, on prévoit selon l'invention, un véhicule articulé comprenant une cabine solidaire d'une portion arrière de châssis pourvue d'un essieu moteur arrière et une plateforme technique solidaire d'une portion avant de châssis pourvue d'un essieu moteur avant, la portion arrière de châssis et la portion avant de châssis étant articulées l'une à l'autre autour d'un axe d'articulation du véhicule s'étendant selon une direction sensiblement orthogonale à un plan d'appui du véhicule articulé, au moins un vérin d'orientation relative s'étendant entre les portions avant et arrière, la plateforme technique comportant des moyens mécanisés de chargement, depuis le sol, et de déchargement, au sol, d'un touret de câble ainsi que des moyens de dévidement du câble à partir du touret.

Chaque essieu moteur comprend deux roues routières et chaque partie de châssis est pourvue d'un essieu ferroviaire pourvu de roues ferroviaires entrainées en rotation par un tambour d'entraînement, chaque essieu ferroviaire est mobile pour adopter une position déployée dans laquelle le tambour d'entraînement vient au contact d'au moins une roue ferroviaire, les roues routières n'étant plus en contact avec le sol lorsque les essieux ferroviaires sont en position déployée, et une position rétractée dans laquelle les roues ferroviaires sont escamotées par rapport aux roues routières.

Ainsi, le véhicule articulé selon l'invention est un véhicule mixte ferroviaire/routier dont la structure permet une insertion sur les voies ferroviaires et une évacuation de celles-ci qui sont facilitées, ce qui permet d'optimiser les temps de travail pour une durée d'intervention définie. Le véhicule selon l'invention peut donc évoluer sur route et voie ferrée à l'aide d'une unique unité motrice liée aux essieux moteurs.

Avantageusement les moyens de chargement et de déchargement d'un touret de câble ainsi que les moyens de dévidement du touret de câble sont solidaires d'un module technique pourvu des moyens de sa fixation amovible sur la plateforme technique.

Ainsi, le véhicule articulé selon l'invention peut accueillir différents types de plateformes techniques et être utilisé pour d'autres travaux.

Selon un mode de réalisation préféré, les moyens de chargement et de déchargement d'un touret de câble comprennent une paire de bras articulés autour d'un axe sensiblement orthogonal à l'axe d'articulation du véhicule.

Ces moyens de chargement et de déchargement ont une structure relativement simple qui peut en outre comprendre des moyens d'ajustement de la distance séparant les bras articulés. Ainsi, le véhicule articulé peut charger différentes largeurs de tourets de câbles sans avoir besoin d'adaptateurs spécifiques.

Avantageusement encore, les moyens de dévidement du câble comprennent une tête de déroulage qui comprend des moyens de mesure de la tension du câble. Ceci permet de s'assurer que le couple vitesse du véhicule et vitesse de dévidement du câble est adapté aux prescriptions de pose du câble.

Avantageusement, les moyens de dévidement du câble comprennent au moins un moteur comprenant des moyens de sa solidarisation en rotation avec le touret de câble.

Avantageusement encore, la tête de déroulage est montée à rotation sur le mât télescopique.

Selon un mode de réalisation particulier, les moyens de mesure de la tension du câble comprennent un dynamomètre s'étendant entre le guide et le mât télescopique.

D'autres caractéristiques et avantages ressortiront à la lecture de la description sui suit d'un mode de réalisation particulier non limitatif de l'invention.

### BREVE DESCRIPTION DES DESSINS

Il sera fait référence aux figures annexées, parmi lesquelles :
- la figure 1 est une vue schématique en perspective d'un véhicule articulé selon l'invention ;
- la figure 2 est une vue schématique en perspective d'un module technique destiné à être monté sur le véhicule de la figure 1 ;
- la figure 3 est une vue schématique de côté du véhicule articulé de la figure 1 dans une configuration routière ;
- la figure 4 est une vue schématique de côté du véhicule articulé de la figure 1 dans une configuration ferroviaire ;
- la figure 5 est une vue schématique en perspective d'une tête de déroulage du module technique de la figure 2 ;
- la figure 6 est une vue schématique en perspective de la tête de déroulage de la figure 5 ;
- les figures 7 et 8 sont des vues schématiques en perspective du véhicule de la figure 1 lors d'étapes de chargement ;
- les figures 9 et 10 sont des vues de dessus du véhicule de la figure 1 lors d'étapes ultérieures de chargement ;
- la figure 11 est une vue similaire à celle de la figure 7 une fois les étapes de chargement achevées ;
- la figure 12 est une vue schématique en perspective de détail de la plateforme de la figure 2 ;
- la figure 13 est une vue schématique en plan du véhicule de la figure 1 s'engageant sur une voie ferrée ;
- la figure 14 est une vue schématique en plan du véhicule de la figure 1 une fois en place sur une voie ferrée ;
- la figure 15 est une vue de détail en plan de la tête de déroulage de la figure 5.

### DESCRIPTION DETAILLEE DE L'INVENTION

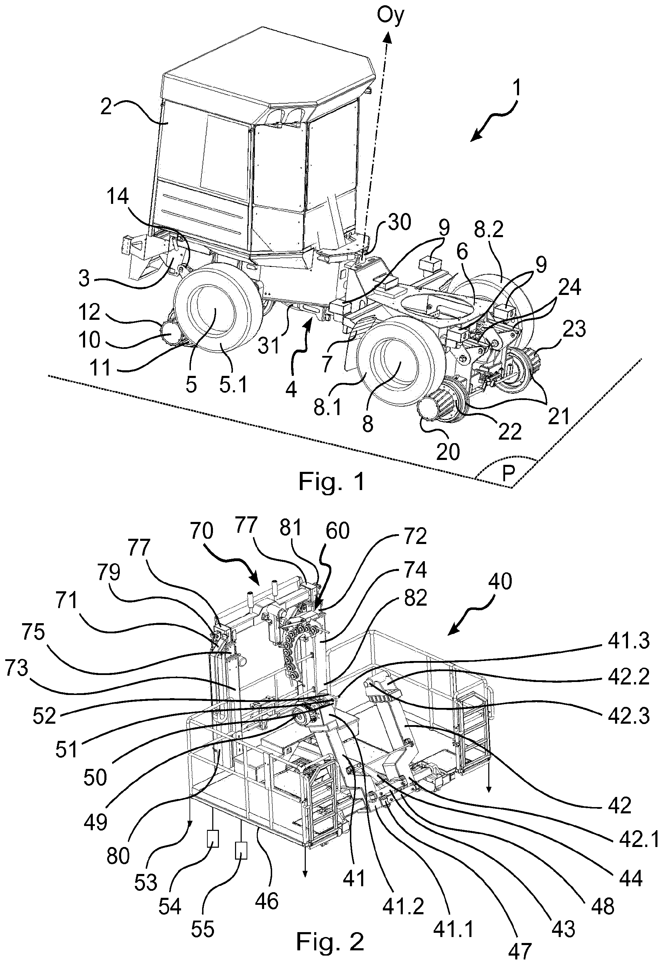

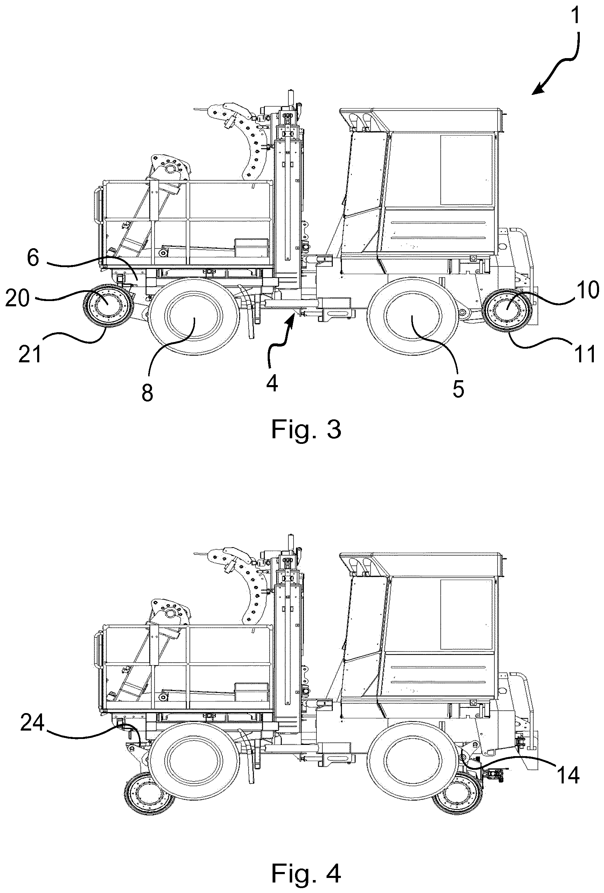

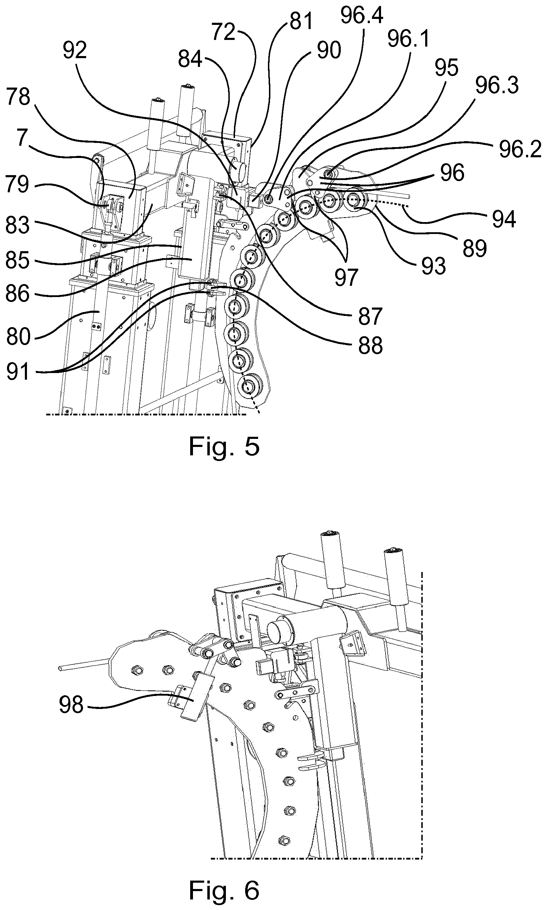

En référence aux figures 1 à 6, le véhicule de l'invention, généralement désigné 1, comprend :
- un châssis 4 ayant une portion arrière 3 et une portion avant 7 articulées l'une à l'autre autour d'un axe d'articulation 30 du véhicule 1 s'étendant selon une direction Oy sensiblement orthogonale à un plan d'appui P du véhicule 1 sur le sol ;
- un essieu moteur arrière 5 qui est muni de roues 5.1 et 5.2 de type routier et qui est monté sous la portion arrière 3 ;
- un essieu moteur avant 8 qui est muni de roues 8.1 et 8.2 de type routier et qui est monté sous la portion avant 7 ;
- une cabine 2 qui est solidaire de la portion arrière 3 du châssis 4 et qui est pourvue d'une échelle d'accès à l'arrière ;
- une plateforme technique 6 qui est solidaire de la portion avant 7 du châssis 4 et qui comprend quatre coins 9 de fixation de type ISO pour conteneur.

Des vérins 31 d'orientation s'étendent depuis la portion arrière 3 du châssis 4 vers la portion avant 7 du châssis 4 pour permettre de régler l'orientation de la portion avant 7 par rapport à la portion arrière 4 et donc ainsi de diriger le véhicule. Les vérins 31 assurent également un blocage de la direction.

Le véhicule selon l'invention est ici un véhicule mixte ferroviaire/routier et comprend à cette fin :
- un essieu ferroviaire arrière 10 pourvu de roues ferroviaires 11 entraînées en rotation par un tambour d'entraînement arrière droit 12 et un tambour d'entraînement arrière gauche 13;
- un essieu ferroviaire avant 20 pourvu de roues ferroviaires 21 entraînées en rotation par un tambour d'entraînement avant droit 22 et un tambour d'entraînement avant gauche 23.

Les essieux ferroviaires arrière 10 et avant 20 (couramment appelés « lorry ») sont respectivement articulés sur les portions arrière 3 et avant 7 du châssis 4 et respectivement actionnés par deux vérins arrière 14 de commande d'essieu ferroviaire arrière 10 et deux vérins avant 24 de commande d'essieu ferroviaire avant 20. Les essieux ferroviaires arrière 10 et avant 20 du véhicule 1 sont ainsi déplaçables entre une position déployée et une position escamotée.

Lorsque les tiges des vérins de déploiement arrière 14 et avant 24 se déploient, les essieux ferroviaires 5 et 8 viennent, dans un premier temps, au contact du sol (généralement, cette manœuvre est déclenchée lorsque le véhicule 1 a son axe longitudinal aligné sur une voie ferrée, et les roues ferroviaires 11 et 21 viennent prendre appui sur les bandes de roulage des rails) et soulèvent le véhicule 1 de manière à ce que les roues 5.1, 5.2, 8.1 et 8.2 ne soient plus en contact avec le sol. Les essieux ferroviaires arrière 10 et avant 20 poursuivent ensuite, dans un deuxième temps, leurs mouvements jusqu'à ce que les tambours d'entraînement arrière droit 12 et arrière gauche 13 viennent au contact respectivement des roues 5.1 et 5.2 de l'essieu moteur 5 et que les tambours d'entraînement avant droit 22 et avant gauche 23 viennent au contact respectivement des roues 8.1 et 8.2 de l'essieu moteur 8. Une fois que les tambours d'entraînement 12, 13, 22 et 23 sont au contact des roues 5.1, 5.2, 8.1 et 8.2 les rotations et freinage des roues 5.1, 5.2, 8.1 et 8.2 des essieux moteurs 5 et 8 sont directement transmis aux roues ferroviaires 11 et 21. Ainsi, après déploiement des essieux arrière 5 et avant 8, le véhicule 1 peut évoluer sur les bandes de roulage d'une voie ferrée, les vérins d'orientation 31 étant alors commandés pour bloquer la direction du véhicule en ligne droite. Avantageusement, les essieux ferroviaires arrière 10 et avant 20 peuvent, comme les essieux moteurs 5 et 8, également être équipés de leur propre dispositif de freinage, par exemple des freins à tambour. Les freins des essieux ferroviaires sont avantageusement agencés pour être actifs en l'absence d'énergie, c'est-à-dire qu'un élément élastique rappelle les mâchoires en position de freinage et qu'un élément commandé, comme un piston, s'oppose à l'effort de rappel lorsqu'il est alimenté en énergie.

Lorsque les tiges des vérins de déploiement arrière 14 et avant 24 se rétractent, les essieux ferroviaires 10 et 20 sont amenés dans leur position escamotée dans laquelle les roues 5.1, 5.2, 8.1 et 8.2 des essieux moteur 5 et 8 sont en contact avec le sol et les tambours d'entraînement 12, 13, 22 et 23 des roues ferroviaires 11 et 21 ne sont pas en contact avec les roues 5.1, 5.2, 8.1 et 8.2 des essieux moteur 5 et 8. Dans cette configuration, le véhicule 1 peut circuler sur les routes.

On notera que le véhicule est équipé de capteurs de position des essieux ferroviaires. L'unité de commande du véhicule considère le véhicule en position route lorsque les capteurs détectent que les essieux ferroviaires sont en position escamotée : l'unité de commande autorise alors le pilotage des vérins d'orientation 31 pour modifier l'orientation de la portion avant par rapport à la portion arrière du châssis. L'unité de commande du véhicule considère le véhicule en position ferroviaire lorsque les capteurs détectent que les essieux ferroviaires sont en position déployée : l'unité de commande bloque alors les vérins d'orientation 31 de manière que la portion avant et la portion arrière du châssis soient alignées l'une avec l'autre. Des capteurs de position de la tige des vérins d'orientation 31 informent l'unité de commande de l'arrivée des tiges dans cette position. De préférence, ces capteurs sont agencés pour détecter la position de la tige le long de toute la course de celle-ci. Ces capteurs sont par exemple des capteurs inductifs. Il est de plus prévu ici un capteur spécifique monté sur la portion arrière et/ou la portion avant pour détecter la position alignée des portions avant et arrière du châssis.

Le véhicule est ici équipé d'un module technique 40, représenté en figure 2, comportant quatre verrous 53 de type « twistlocks » destinés à coopérer avec les coins 9 de fixation de la plateforme technique 6 pour permettre la fixation amovible du module technique 40 sur ladite plateforme technique 6.

Le module technique 40 comporte à l'avant un bras droit 41 et un bras gauche 42 dont les premières extrémités respectives 41.1 et 42.1 sont montées à coulissement sur un arbre 43 de section carrée. L'arbre 43 s'étend selon une direction sensiblement orthogonale à celle de l'axe Oy et comprend un levier central 44 relié par un vérin 45 hydraulique à un châssis 46 du module technique 40. Un premier vérin d'espacement 47 hydraulique s'étend parallèlement à l'axe longitudinal de l'arbre 43 depuis le levier central 44 jusqu'au bras droit 41 tandis qu'un deuxième vérin d'espacement 48 hydraulique s'étend parallèlement à l'arbre 43 depuis le levier central 44 jusqu'au bras gauche 42. Les deuxièmes extrémités 41.2 et 42.2 respectives des bras droit 41 et gauche 42 comprennent respectivement un cône de centrage 41.3 et un cône de centrage 42.3 venant en saillie des deuxièmes extrémités 41.2 et 42.2 selon une direction sensiblement parallèle à l'axe longitudinal de l'arbre 43. Les cônes de centrage 42.3 sont montés libre en rotation sur les bras droit 41 et gauche 42. Un motoréducteur 49 est solidaire de la deuxième extrémité 41.2 du bras droit 41. L'arbre de sortie du motoréducteur 49 est solidaire en rotation d'un plateau 50 possédant une excroissance radiale 51, formant bras de levier, en saillie de laquelle vient une broche d'entrainement 52.

Le module technique 40 comprend également une tête de déroulage 60 de câble portée par un mât télescopique 70 solidaire de l'arrière du châssis 46. Le mât télescopique 70 comprend ici deux poteaux télescopiques 71 et 72 comportant respectivement un premier élément fixe droit 73 et gauche 74, un deuxième élément intermédiaire droit 75 et gauche 76 respectivement guidés à coulissement dans le premier élément fixe droit 73 et gauche 74. Le deuxième élément intermédiaire droit 75 et gauche 76 accueillant respectivement à coulissement un troisième élément droit 77 et gauche 78. Les extrémités libres du troisième élément droit 77 et du troisième élément gauche 78 sont respectivement solidaires de l'extrémité 79 de la tige d'un vérin droit 80 et de l'extrémité 81 de la tige d'un vérin gauche 82. Les extrémités libres du troisième élément droit 77 et du troisième élément gauche 78 sont reliés l'une à l'autre par une traverse 83. Un axe 84 vient en saillie du milieu de la traverse 83 selon une direction sensiblement orthogonale à un plan comprenant les axes des tiges des vérins droit 80 et gauche 81. Un support 85 est monté à pivotement autour de l'axe 84. Le support 85 comprend une portion 86 s'étendant radialement par rapport à l'axe 84 et de laquelle viennent en saillie deux paliers rotulés 87 et 88. Un guide 89, ici un plat métallique cintré pour former une portion de cercle d'environ 90 degrés d'amplitude, est monté à rotation sur les paliers 87 et 88 selon un axe sensiblement parallèle aux axes des tiges des vérins droit 80 et gauche 81 à l'aide de deux pattes 90 et 91 soudées sur le guide 89. Un dynamomètre 92 est placé entre la patte 91 et le palier 87. Neuf galets à gorge 93 sont montés à pivotement sur le guide 89, parallèlement à la fibre neutre 94 du guide 89. Le guide 89 comprend également un frein de câble 95 comportant un premier et un deuxième levier 96.1 et 96.2 respectivement articulés sur le guide 89 en leur première extrémité 96.3 et 96.4. Les deuxièmes extrémités 96.5 et 96.6 respectives du premier et deuxième leviers 96.1 et 96.2 sont pourvues d'un galet 97 mobile, dont le diamètre est inférieur à celui des galets 93. Ces galets 97 font face aux galets 93 et en sont séparés d'une distance D sensiblement égale à un diamètre de câble de caténaire. Un vérin 98 lié aux leviers 96 commande un rapprochement ou un éloignement relatif des galets 97 et 93.

Le module technique 40 comporte également, de manière optionnelle, des connecteurs hydrauliques 54 et/ou électriques 55 permettant de raccorder les éléments de motorisation du module technique à la source d'énergie appropriée présente sur le véhicule.

Enfin, le module technique 40 comprend également une commande déportée 32 permettant la conduite du véhicule 1 et/ou pouvant être également reliée à l'ensemble des actionneurs et des vérins du module technique 40.

De manière classique, le véhicule et le module technique sont équipés de capteurs de position des éléments mobiles embarqués.

De manière classique, le véhicule et le module technique sont équipés de conducteurs électriques de mise à l'équipotentialité des parties conductrices du véhicule et du module technique qui sont susceptibles d'être accidentellement sous tension et en contact avec un utilisateur du véhicule lorsque celui-ci est en position sur une voie ferrée. Les conducteurs électriques de mise à l'équipotentialité assurent la conduction du courant jusqu'à un des rails de la voie ferrée via l'un des essieux ferroviaires et l'une des roues de celui-ci. De préférence, on prévoit des conducteurs électriques de mise à l'équipotentialité sur les deux roues de l'essieu ferroviaire et un sélecteur de rail qui est relié à ces conducteurs et est agencé pour permettre d'assurer la mise à l'équipotentialité au choix vers le rail de droite, le rail de gauche ou les deux rails à la fois.

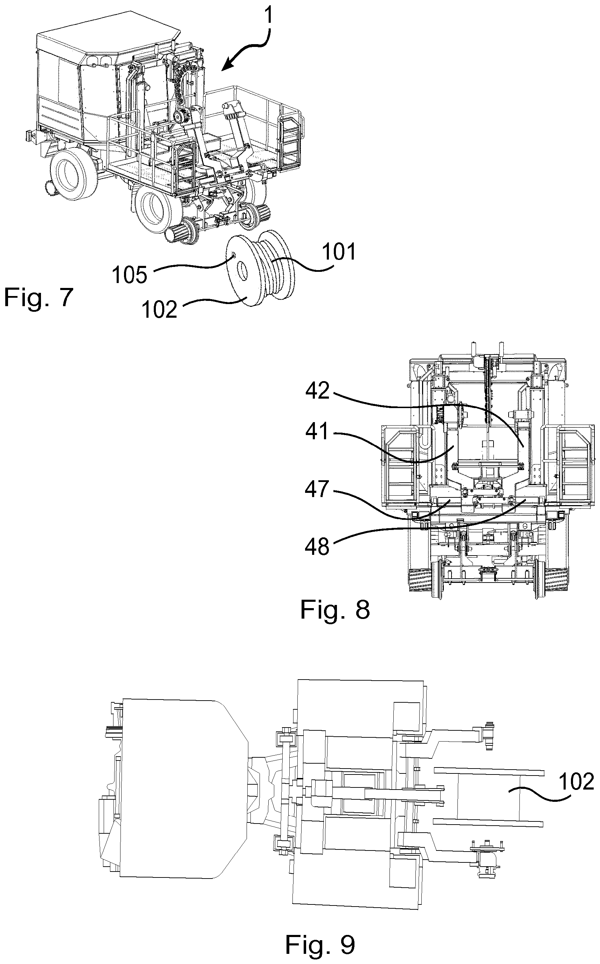

L'utilisation du véhicule articulé 1 selon l'invention va maintenant être décrite en référence aux figures 7 à 15.

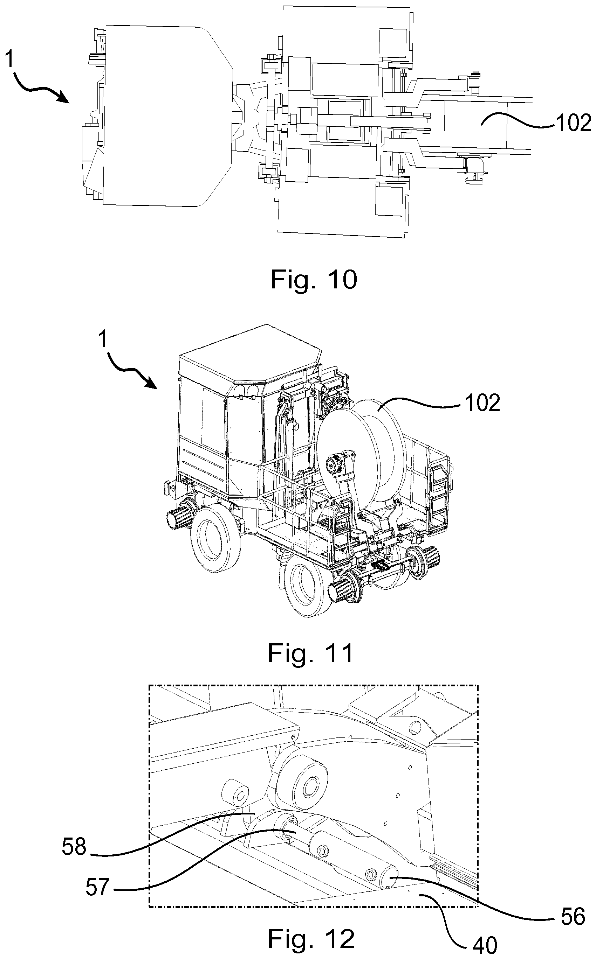

Préalablement à une intervention de pose de câble 101 de caténaire, le véhicule 1 doit charger un touret 102 de câble 101. Pour ce faire, l'opérateur positionne le véhicule articulé 1 face au touret 102 reposant sur ses flasques (figure 7). Il commande ensuite le déploiement des vérins d'espacement 47 et 48, ce qui provoque l'éloignement relatif des bras droit 41 et gauche 42 jusqu'à ce qu'ils aient atteint leur positions extrêmes. L'opérateur commande alors le déploiement du vérin 45 ce qui provoque la rotation de l'arbre 43 et des bras droit 41 et gauche 42 jusqu'à ce que les cônes de centrage 41.3 et 42.3 soient positionnés sensiblement face aux logements axiaux 103 et 104 du touret 102 (figure 8). L'opérateur commande ensuite la rétraction des vérins d'espacement 47 et 48 pour approcher les cônes de centrage 41.3 et 42.3 des logements axiaux 103 et 104. L'opérateur ajuste, le cas échéant, la position de la tige du vérin 45 pour aligner finement les cônes de de centrage 41.3 et 42.3 avec les logements axiaux 103 et 104. L'opérateur agit également sur le motoréducteur 49 de manière à positionner la broche d'entraînement 52 face au logement 105 correspondant sur le touret 102 (figure 9). Une fois les bras droit 41 et gauche 42 serrés sur le touret 102 (figure 10), l'opérateur commande la rétraction de la tige du vérin 45 et ramène ainsi le touret 102 en position de travail sur le module technique 40 (figure 11). Avantageusement, des vérins de verrouillage 56 solidaires du module technique 40 enclenchent des axes de verrouillage 57 dans des oreilles 58 soudées sur les bras droit 41 et gauche 42 (figure 12) .

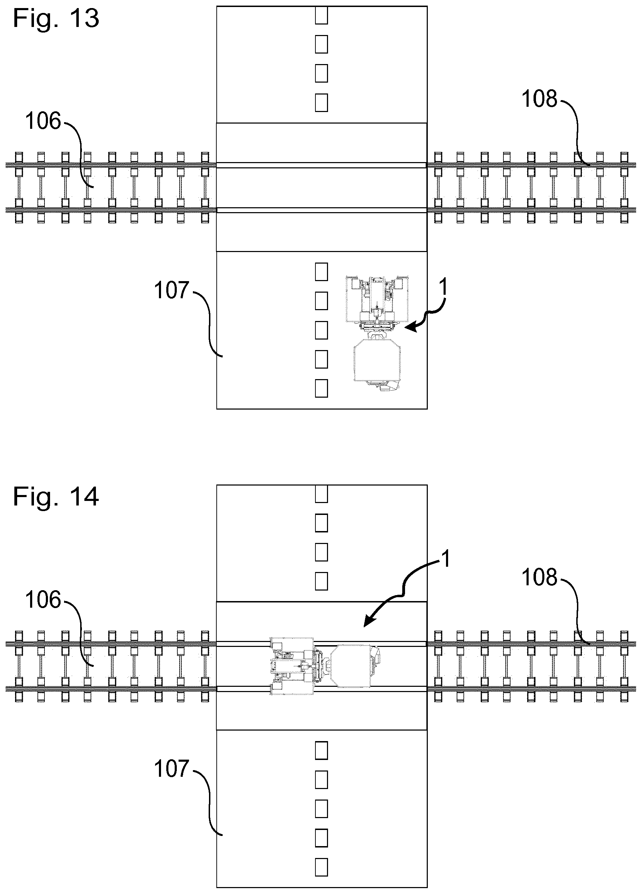

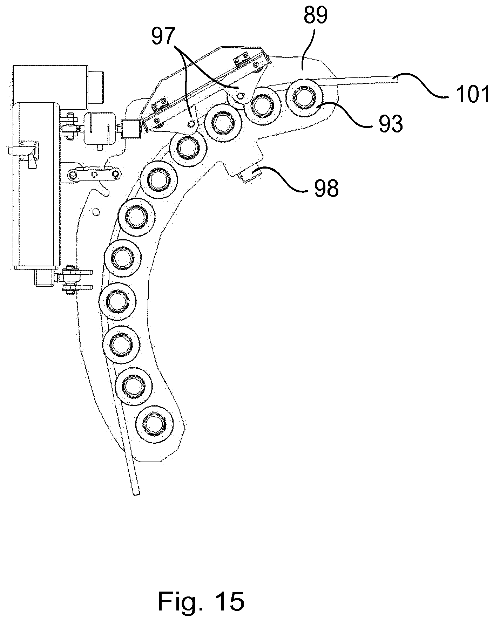

Le véhicule articulé 1 aborde ensuite un accès de franchissement aménagé d'une voie ferrée 106 tel qu'une intersection avec une voie routière 107 (figure 13). Grâce à son rayon de braquage réduit, le véhicule articulé 1 se positionne aisément parallèlement aux rails 108 de la voie ferrée 106 à l'aide des essieux moteurs arrière 4 et avant 8. Une fois le véhicule articulé 1 en position, l'opérateur entame la procédure de déploiement des essieux ferroviaires arrière 10 et avant 20 en commandant le déploiement des tiges des vérins 14 et 24. Lorsque les essieux ferroviaires arrière 10 et avant 20 sont déployés, les vérins 31 de blocage de direction sont eux aussi déployés. Le véhicule articulé 1 peut alors circuler sur la voie ferrée 106. Quand le véhicule articulé 1 est parvenu sur la zone d'intervention, l'opérateur saisit un brin libre du câble 101 enroulé sur le touret 102 et le positionne dans le guide 89. Il commande donc la sortie de la tige du vérin 98 afin d'éloigner les galets 97 des galets 93. Une fois le câble 101 passé sur les galets 93 (figure 15), l'opérateur commande la rentrée de la tige du vérin 98 et bloque ainsi le câble en place. Le guide 89 oriente alors le câble 101 en provenance du touret 102 dans une direction de sortie du guide 89 s'étendant selon un angle sensiblement égal à 90 degrés par rapport à la direction d'entrée du câble 101 dans le guide 89. L'opérateur commande ensuite la sortie des tiges du vérin droit 80 et du vérin gauche 82, provoquant ainsi le déploiement du mât télescopique 70 jusqu'à ce que la sortie du guide 89 se situe à la hauteur de pose du câble 101 de caténaire. Lors du déploiement du mât télescopique 70, l'opérateur accompagne ce mouvement en commandant la rotation du motoréducteur 49 de manière à provoquer le déroulement du câble 101. Lorsque le mât télescopique 70 a atteint sa hauteur de travail, l'opérateur commande, de manière synchrone, l'avancement du véhicule articulé 1 et la rotation du motoréducteur 49, de manière à conserver une valeur de tension du câble 101 constante. Cette valeur est mesurée à l'aide du dynamomètre 92. Avantageusement, la valeur de la tension du câble 101 mesurée par le dynamomètre 92 est enregistrée en même temps que les coordonnées GPS du véhicule articulé 1, ce qui permet d'assurer la traçabilité des paramètres de pose du câble 101.

Dans le même temps, des opérateurs montés sur une nacelle accrochent le câble à des supports aériens portés par exemple par des portiques enjambant la voie. Le dévidage du câble est effectué en coordination avec lesdits opérateurs pour leur faciliter la mise en place du câble. Avantageusement, les opérateurs chargés de la mise en place du câble disposent d'une télécommande reliés sans fil à l'unité de commande du véhicule de manière à permettre aux opérateurs de commander le véhicule et plus particulièrement la vitesse de déplacement du véhicule et la vitesse de dévidage du câble qui conditionnent la tension du câble. Ainsi les opérateurs de pose du câble peuvent augmenter ou réduire la vitesse de déplacement du véhicule et augmenter ou réduire la vitesse de dévidage du câble. On notera que le conducteur dispose d'un dispositif d'arrêt d'urgence lui permettant d'arrêter le véhicule quelles que soient les instructions données via la télécommande.

Lorsque les travaux de pose du câble 101 sont achevés, le véhicule articulé 1 se rend sur un accès de franchissement aménagé et, en rétractant les essieux ferroviaires arrière 10 et avant 20, peut libérer la voie ferrée 106.

Les roues 5.1, 5.2, 8.1, 8.2 du véhicule sont de préférence équipées de pneus tout-terrain et le véhicule en position routière a de préférence une résistance mécanique et une hauteur sous châssis lui procurant des aptitudes de franchissement suffisantes pour pouvoir monter sur le ballast et franchir une voie ferrée hors d'un accès de franchissement aménagé.

Le véhicule étant un véhicule mixte ferroviaire/routier, il est agencé pour être conforme aux gabarits standards ferroviaire et routier.

Bien entendu, l'invention n'est bien pas limitée au mode de réalisation décrit mais englobe toute variante entrant dans le champ de l'invention telle que définie par les revendications.

En particulier :
- bien qu'ici chaque essieu ferroviaire soit pourvu de deux tambours d'entrainement par les roues de l'essieu moteur, l'invention s'applique également à des essieux ferroviaires pourvu d'un unique tambour d'entrainement ;
- bien qu'ici l'essieu moteur soit pourvu de pneumatiques, l'invention s'applique également à des essieux moteurs pourvu d'autres types de roues comme par exemple des roues pleines ;
- bien qu'ici le véhicule articulé comprenne deux bras coulissants sur un arbre rotatif, l'invention s'applique également à d'autres types de moyens mécanisés de chargement et de déchargement d'un touret de câble comme par exemple un bras de grue, un tapis convoyeur, une ensemble rampe et treuil ou encore des fourches de levage ;
- bien qu'ici le véhicule articulé comprenne deux vérins d'espacement s'étendant depuis le levier central jusqu'aux bras coulissants, l'invention s'applique également à d'autres types de moyens d'ajustement de la distance entre les bras, comme par exemple un unique vérin s'étendant entre les deux bras, un mouflage de câbles, un ensemble vis écrou, un jeu de roues dentées coopérant avec une crémaillère ;
- bien qu'ici le véhicule articulé comprenne un motoréducteur, un mât télescopique et un guide de câble, l'invention s'applique à d'autres moyens de dévidement d'un câble comme par exemple une perche manuelle, des galets d'entraînement venant en appui sur une des flasques du touret, un mât de hauteur fixe, pouvant éventuellement être dépourvu de guide câble ;
- bien qu'ici le guide câble soit réalisé à l'aide d'un plat cintré, l'invention s'applique également à d'autres modes de réalisation d'un tel plat comme par exemple par oxycoupage ou découpe laser ;
- bien qu'ici l'invention comprenne un dynamomètre placé entre une patte du guide et un palier du mât télescopique, l'invention s'applique également à d'autres moyens de mesure de la tension du câble comme par exemple une jauge de contrainte placée à la base du mât télescopique, un axe dynamométrique placé dans le palier de liaison du guide au mât, une roulette préchargée en contact avec le câble ;
- bien qu'ici le guide comprenne neuf galets de guidage, l'invention s'applique également à un guide comprenant un nombre différent de galets de guidage comme par exemple deux galets ou plus ou mettant en œuvre d'autres moyens de guidage comme par exemple des rouleaux ou une glissière en téflon ;
- bien qu'ici le module technique soit relié à la plateforme technique du véhicule articulé à l'aide de twistlocks, l'invention s'applique également à d'autres moyens de fixation réversible du module technique sur la plateforme technique comme par exemple un assemblage boulonné ou un dispositif de brochage ;
- bien qu'ici les bras soient articulés autour d'un axe sensiblement orthogonal à l'axe d'articulation du véhicule articulé, l'invention s'applique également à d'autres orientations de l'axe d'articulation des bras relativement à l'axe d'articulation du véhicule articulé comme par exemple une orientation parallèle ou quelconque ;
- bien qu'ici l'ensemble des vérins soit des vérins hydrauliques, l'invention s'applique également à d'autres types d'actionneurs comme par exemple des vérins électriques ou pneumatiques, ou des actionneurs d'autre nature comme des actionneurs rotatifs ;
- bien qu'ici le mât télescopique comprenne trois parties coulissantes, l'invention s'applique également à un mât télescopique comprenant deux pièces coulissant l'une par rapport à l'autre ou plus de trois pièces coulissant les unes par rapport aux autres.

## Revendications

1. Véhicule articulé (1) comprenant un châssis, une cabine solidaire (2) d'une portion arrière (3) de châssis (4) pourvue d'un essieu moteur arrière (5) et une plateforme technique (6) solidaire d'une portion avant (7) de châssis (4) pourvue d'un essieu moteur avant (8),
la portion arrière (3) de châssis (4) et la portion avant (7) de châssis (4) étant articulées l'une à l'autre autour d'un axe d'articulation (30) du véhicule (1) s'étendant selon une direction sensiblement orthogonale à un plan d'appui (P) du véhicule articulé (1), au moins un vérin d'orientation relative s'étendant entre les portions avant et arrière, la plateforme technique (6) comportant des moyens mécanisés de chargement, depuis le sol, et de déchargement (41, 42), au sol, d'un touret de câble ainsi que des moyens de dévidement (49, 60) du câble (101) à partir du touret (102), et dans lequel chaque essieu moteur comprend deux roues routières et chaque partie de châssis est pourvue d'un essieu ferroviaire (10, 20) pourvu de roues ferroviaires (11, 21) entrainées en rotation par un tambour d'entraînement (12, 13, 22, 23), chaque essieu ferroviaire est mobile pour adopter une position déployée dans laquelle le tambour d'entraînement (12, 13, 22, 23) vient au contact d'au moins une roue ferroviaire (5.1, 5.2, 8.1, 8.2), les roues routières (5.1, 5.2, 8.1, 8.2) n'étant plus en contact avec le sol lorsque les essieux ferroviaires (10, 20) sont en position déployée, et une position rétractée dans laquelle les roues ferroviaires sont escamotées par rapport aux roues routières.

2. Véhicule articulé (1) selon la revendication 1, dans lequel les moyens de chargement et de déchargement (41, 42) d'un touret de câble ainsi que les moyens de dévidement (49, 60) du touret de câble sont solidaires d'un module technique (40) pourvu des moyens (53) de sa fixation amovible sur la plateforme technique (6) .

3. Véhicule articulé (1) selon l'une quelconque des revendications précédentes, dans lequel les moyens de chargement et de déchargement (41, 42) comprennent une paire de bras articulés (41, 42) autour d'un axe sensiblement orthogonal à l'axe d'articulation (30) du véhicule articulé(1).

4. Véhicule articulé (1) selon la revendication 3, dans lequel les moyens de chargement et de déchargement (41, 42) comprennent des moyens d'ajustement (47, 48) d'un écartement des bras articulés (41, 42).

5. Véhicule articulé (1) selon la revendication 4, dans lequel les moyens d'ajustement (47, 48) de l'écartement des bras articulés comprennent au moins un vérin (47, 48).

6. Véhicule articulé (1) selon l'une quelconque des revendications précédentes, dans lequel les moyens de dévidement (49, 60) du câble comprennent au moins un moteur (49) comprenant des moyens de sa solidarisation en rotation (52) avec le touret de câble.

7. Véhicule articulé (1) selon l'une quelconque des revendications précédentes, dans lequel les moyens de dévidement (49, 60) du câble comprennent une tête de déroulage (60) de câble portée par un mât télescopique (70) .

8. Véhicule articulé (1) selon la revendication 7, dans lequel la tête de déroulage (60) comprend un guide (89) agencé pour orienter le câble en provenance du touret dans une direction de sortie du guide (89) s'étendant selon un angle sensiblement égal à 90 degrés par rapport à une direction d'entrée dans le guide (89).

9. Véhicule articulé (1) selon la revendication 7, dans lequel la tête de déroulage (60) est montée à rotation sur le mât télescopique (70).

10. Véhicule articulé (1) selon la revendication 7, dans lequel la tête de déroulage (60) comprend des moyens de mesure (92) de la tension du câble.

11. Véhicule articulé (1) selon les revendications 8 et 10, dans lequel les moyens de mesure (92) de la tension du câble comprennent un dynamomètre (92) s'étendant entre le guide (89) et le mât télescopique (70).

12. Véhicule articulé (1) selon l'une quelconque des revendications précédentes, dans lequel la plateforme technique comprend une commande déportée (32) de conduite du véhicule et/ou de réglage de la tension de dévidement du câble.

## Patentansprüche

1. Gelenkfahrzeug (1), umfassend ein Fahrgestell, eine Kabine (2), die fest mit einem hinteren Abschnitt (3) des Fahrgestells (4) verbunden ist, der mit einer hinteren Antriebsachse (5) ausgestattet ist, und eine technische Plattform (6), die fest mit einem vorderen Abschnitt (7) des Fahrgestells (4) verbunden ist, der mit einer vorderen Antriebsachse (8) ausgestattet ist,
wobei der hintere Abschnitt (3) des Fahrgestells (4) und der vordere Abschnitt (7) des Fahrgestells (4) aneinander um eine Gelenkverbindungsachse (30) des Fahrzeugs (1) angelenkt sind, die sich in einer im Wesentlichen orthogonalen Richtung zu einer Auflageebene (P) des Gelenkfahrzeugs (1) erstreckt, wobei sich mindestens ein Zylinder zur relativen Ausrichtung zwischen dem vorderen und dem hinteren Abschnitt erstreckt, wobei die technische Plattform (6) mechanisierte Mittel (41, 42) zum Laden einer Kabeltrommel ab dem Boden und Entladen derselben auf den Boden umfasst, sowie Abwickelmittel (49, 60) zum Abwickeln des Kabels (101) von der Trommel (102), und bei dem jede Antriebsachse zwei Straßenräder umfasst und jeder Fahrgestellabschnitt mit einer Schienenachse (10, 20) ausgestattet ist, die mit Schienenrädern (11, 21) ausgestattet ist, die von einer Antriebstrommel (12, 13, 22, 23) in Drehung angetrieben werden, wobei jede Schienenachse beweglich ist, um eine ausgefahrene Position einzunehmen, in der die Antriebstrommel (12, 13, 22, 23) mit mindestens einem Schienenrad (5.1, 5.2, 8.1, 8.2) in Kontakt kommt, wobei die Straßenräder (5.1, 5.2, 8.1, 8.2) nicht mehr mit dem Boden in Kontakt sind, wenn die Schienenachsen (10, 20) in der ausgefahrenen Position sind, sowie eine eingefahrene Position, in der die Schienenräder in Bezug auf die Straßenräder eingefahren sind.

2. Gelenkfahrzeug (1) nach Anspruch 1, bei dem die Lade- und Entlademittel (41, 42) für eine Kabeltrommel sowie die Abwickelmittel (49, 60) der Kabeltrommel fest mit einem technischen Modul (40) verbunden sind, das mit Mitteln (53) für seine lösbare Befestigung auf der technischen Plattform (6) ausgestattet ist.

3. Gelenkfahrzeug (1) nach einem der vorhergehenden Ansprüche, bei dem die Lade- und Entlademittel (41, 42) ein Paar Gelenkarme (41, 42) umfassen, die um eine Achse angelenkt sind, die im Wesentlichen orthogonal zur Gelenkverbindungsachse (30) des Gelenkfahrzeugs (1) ist.

4. Gelenkfahrzeug (1) nach Anspruch 3, bei dem die Lade- und Entlademittel (41, 42) Einstellmittel (47, 48) zum Einstellen eines Abstandes der Gelenkarme (41, 42) umfassen.

5. Gelenkfahrzeug (1) nach Anspruch 4, bei dem die Einstellmittel (47, 48) zum Einstellen des Abstandes der Gelenkarme mindestens einen Zylinder (47, 48) umfassen.

6. Gelenkfahrzeug (1) nach einem der vorhergehenden Ansprüche, bei dem die Abwickelmittel (49, 60) zum Abwickeln des Kabels mindestens einen Motor (49) umfassen, der Mittel (52) für seine drehfeste Befestigung mit der Kabeltrommel umfasst.

7. Gelenkfahrzeug (1) nach einem der vorhergehenden Ansprüche, bei dem die Abwickelmittel (49, 60) zum Abwickeln des Kabels einen Kabelabrollkopf (60) umfassen, der von einem Teleskopmast (70) getragen wird.

8. Gelenkfahrzeug (1) nach Anspruch 7, bei dem der Abrollkopf (60) eine Führung (89) umfasst, die ausgebildet ist, um das von der Trommel stammende Kabel in eine Austrittsrichtung der Führung (89) auszurichten, die sich in einem Winkel erstreckt, der im Wesentlichen gleich 90 Grad in Bezug auf eine Eintrittsrichtung in die Führung (89) ist.

9. Gelenkfahrzeug (1) nach Anspruch 7, bei dem der Abrollkopf (60) drehbar an dem Teleskopmast (70) gelagert ist.

10. Gelenkfahrzeug (1) nach Anspruch 7, bei dem der Abrollkopf (60) Messmittel (92) zum Messen der Spannung des Kabels umfasst.

11. Gelenkfahrzeug (1) nach den Ansprüchen 8 und 10, bei dem die Messmittel (92) zum Messen der Spannung des Kabels einen Dynamometer (92) umfassen, der sich zwischen der Führung (89) und dem Teleskopmast (70) erstreckt.

12. Gelenkfahrzeug (1) nach einem der vorhergehenden Ansprüche, bei dem die technische Plattform eine Fernsteuerung (32) zum Lenken des Fahrzeugs und/oder zum Einstellen der Abwickelspannung des Kabels umfasst.

## Claims

1. Articulated vehicle (1) comprising a chassis, a cab (2) fixed to a rear portion (3) of chassis (4) provided with a rear driving axle (5) and a technical platform (6) fixed to a front portion (7) of chassis (4) provided with a front driving axle (8),
the rear portion (3) of chassis (4) and the front portion (7) of chassis (4) being articulated to one another about an articulation axis (30) of the vehicle (1) extending in a direction substantially orthogonal to a bearing plane (P) of the articulated vehicle (1), at least one relative orientation cylinder extending between the front and rear portions, the technical platform (6) including mechanized means (41, 42) for loading from the ground and unloading onto the ground a cable drum and means (49, 60) for unwinding the cable (101) from the drum (102), and wherein each driving axle comprises two road wheels and each chassis portion is provided with a railway axle (10, 20) provided with railway wheels (11, 21) rotated by a driving drum (12, 13, 22, 23), each railway axle is movable to adopt a deployed position in which the driving drum (12, 13, 22, 23) comes into contact with at least one railway wheel (5.1, 5.2, 8.1, 8.2), the road wheels (5.1, 5.2, 8.1, 8.2) no longer being in contact with the ground when the railway axles (10, 20) are in the deployed position, and a retracted position in which the railway wheels are retracted relative to the road wheels.

2. Articulated vehicle (1) according to claim 1, wherein the means (41, 42) for loading and unloading a cable drum and the means (49, 60) for unwinding the cable drum are fixed to a technical module (40) provided with means (53) for removably fixing it to the technical platform (6).

3. Articulated vehicle (1) according to either one of the preceding claims, wherein the loading and unloading means (41, 42) comprise a pair of arms (41, 42) articulated about an axis substantially orthogonal to the articulation axis (30) of the articulated vehicle (1).

4. Articulated vehicle (1) according to claim 3, wherein the loading and unloading means (41, 42) comprise means (47, 48) for adjusting a spacing of the articulated arms (41, 42).

5. Articulated vehicle (1) according to claim 4, wherein the means (47, 48) for adjusting the spacing of the articulated arms comprise at least one cylinder (47, 48).

6. Articulated vehicle (1) according to any one of the preceding claims, wherein the means (49, 60) for unwinding the cable comprise at least one motor (49) comprising means (52) for constraining it to rotate with the cable drum.

7. Articulated vehicle (1) according to any one of the preceding claims, wherein the cable unwinding means (49, 60) comprise a cable unwinding head (60) carried by a telescopic mast (70).

8. Articulated vehicle (1) according to claim 7, wherein the unwinding head (60) comprises a guide (89) arranged to orient the cable from the drum in a direction of exit from the guide (89) extending at an angle substantially equal to 90 degrees with respect to a direction of entry into the guide (89).

9. Articulated vehicle (1) according to claim 7, wherein the unwinding head (60) is rotatably mounted on the telescopic mast (70).

10. Articulated vehicle (1) according to claim 7, wherein the unwinding head (60) comprises means (92) for measuring the tension of the cable.

11. Articulated vehicle (1) according to claims 8 and 10, wherein the cable tension measuring means (92) comprise a dynamometer (92) extending between the guide (89) and the telescopic mast (70).

12. Articulated vehicle (1) according to any one of the preceding claims, wherein the technical platform comprises a remote control (32) for driving the vehicle and/or adjusting the unwinding tension of the cable.
